# EUROPEAN PATENT APPLICATION

(11) **EP 2 218 955 A1**
(43) Date of publication of application: **18.08.2010**
(21) Application number: 10153130.9
(22) Date of filing: 10.02.2010
(51) Int. Cl.: F16L 3/237, F16L 3/10

(54) **Conductive and acoustically isolated tube clamp**

(30) Priority: 13.02.2009 US 370841
(71) Applicant: Newfrey LLC, Newark, Delaware 19711 (US)
(72) Inventor: Smith, Bradley D., Shelby Township, MI 48317 (US); Wernert, Terri L., China Township, MI 48054 (US); Pilon, Robert E., Avoca, MI 48006 (US); Hozdish, Michael E., Romeo, MI 48065 (US)
(74) Representative: Haar, Lucas Heinz Jörn

(57) **Abstract**

A clamp (10) includes polymeric body portions (12,14) connected by a living hinge (57). A retention section (16,29) is created in each body portion (12,14). Elastically deflectable material insert members (22,33) have injection molded features adapted to engage to the retention sections. An electrically conductive material is included with the elastically deflectable material to render the clamp electrically conductive.

## Description

### FIELD

The present disclosure relates to molded tubing clamps having a living hinge separating clamp body portions and electrically conductive material.

### BACKGROUND

This section provides background information related to the present disclosure which is not necessarily prior art.

Clip or clamp fasteners are commonly used as supports or attachment members to connect one or more tubes, wires, or wireways to vehicle structure such as body panels. Common applications include support for brake and fuel lines. It is known to provide two body halves of a rubber material which acts to dampen vibration of the tubing, each body half having semi-circular aperture portions that create tubular shaped support apertures when the halves are combined, with the tubing engaged in the support apertures. When it is desirable to eliminate the potential for static electrical charge(s) being transferred through the tubing, a separate metal grounding stay is commonly applied by shaping the stay about the perimeter of the rubber body halves and fastening the stay to a vehicle body panel or ground path.

Disadvantages of the present grounding stay design include the necessity of providing an additional metal part which increases fastener assembly cost and increases assembly time. Part alignment issues also occur because it is common to have a metal band encircling the rubber body halves which requires alignment of opposed apertures in the free ends of the metal band in order to provide for connection to a fastener such as a stud.

### SUMMARY

This section provides a general summary of the disclosure, and is not a comprehensive disclosure of its full scope or all of its features.

According to several embodiments, a clamp includes first and second body portions integrally connected by a living hinge. First and second insert members are individually coupled to one of the first and second body portions. The first and second insert members are each an elastically deflectable material. An electrically conductive material is included with the elastically deflectable material of at least one of the first and second insert members to render the clamp electrically conductive.

According to further embodiments, a clamp includes polymeric first and second body portions integrally connected by a living hinge. First and second retention sections are individually created in one of the first and second body portions. First and second insert members having injection molded features are adapted to engage the first insert member to one of the first and second retention sections and the second insert member to the other one of the first and second retention sections. The first and second insert members are each an elastically deflectable material. An electrically conductive material is included with the elastically deflectable material of the first and second insert members to render the clamp electrically conductive.

According to still other embodiments, a method for manufacturing a clamp, the clamp having first and second body portions integrally connected by a living hinge, and first and second insert members, includes: adding an electrically conductive material to a polymeric material to create a first base material; molding the first and second body portions together with the living hinge from the first base material; adding an electrically conductive material to an elastically deflectable material to create a second base material; and co-molding the first and second retention sections from the second base material in a two-shot molding process to join the first insert member to the first body portion and the second insert member to the second body portion.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

Figure 1 is a partial cross-sectional front perspective view of a two-shot tube clamp of the present disclosure;

Figure 2 is a partial cross-sectional front elevational view of the clamp of Figure 1;

Figure 3 is a top plan view of the clamp of Figure 1;

Figure 4 is a bottom plan view of the clamp of Figure 1; and

Figure 5 is a front perspective view similar to Figure 1 further showing items contained by the clamp.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

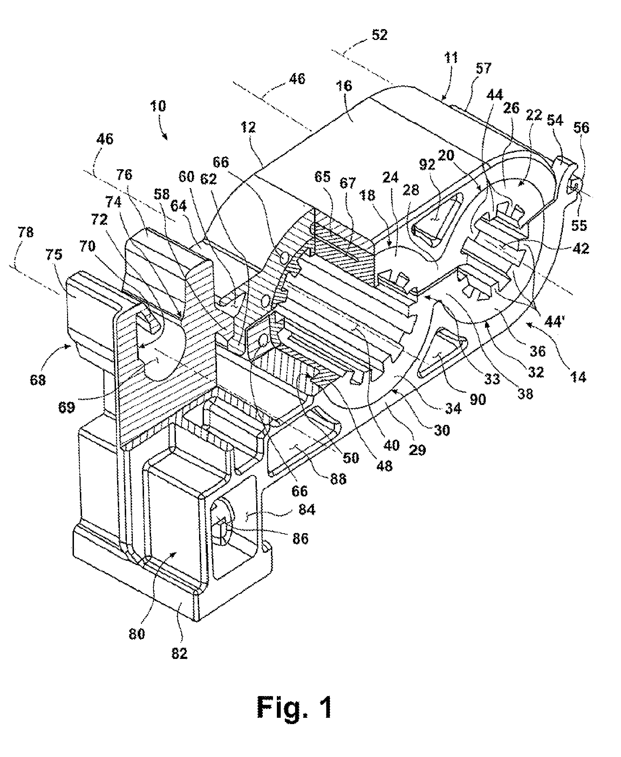

Referring to Figure 1, a vibration dampening electrically conductive clamp 10 includes a clamp body 11 having first and second body portions 12, 14. First body portion 12 includes a first retention section 16 having each of a first retention cavity 18 and a second retention cavity 20, both substantially semi-circular in shape. The first and second retention cavities 18, 20 have parallel longitudinal axes. A first insert member 22 is physically bonded to first retention section 16 by injection molding first insert member 22 and first retention section 16 using a two shot molding process. First insert member 22 includes a first insert portion 24 which is received within first retention cavity 18. First insert member 22 further includes a second insert portion 26 which is received within second retention cavity 20. A first connecting member 28 homogeneously integrally connects the first and second insert portions 24, 26.

The two-shot molding process as referred to herein can be accomplished by first molding first and second body portions 12, 14 in a first mold. First and second body portions 12, 14 are together moved to a second mold where the first and second insert members 22, 33 are then simultaneously molded onto the first and second body portions 12, 14, physically bonding these portions.

The term "homogeneous" as used herein is defined as a part, component, member, or the like having all portions of the part formed of the same material and by the same process used to create the part, such as by molding or casting, such that no portion(s) of the part require connection to any other portion by a secondary process including but not limited to welding, adhesive bonding, mechanical connection, or the like, and the chemical properties of the part material are substantially equivalent throughout the part.

Similar to the first retention section 16 of first body portion 12, second body portion 14 can include a second retention section 29 having a third retention cavity 30 and a fourth retention cavity 32, both substantially semi-circular in shape. Third and fourth retention cavities 30, 32 are oppositely configured and substantially mirror images of the first and second retention cavities 18, 20. A second insert member 33 is connected to second body portion 14 using the two shot injection molding process such that second insert member 33 is physically bonded to second body portion 14. Second insert member 33 includes a third insert portion 34 which is received within third retention cavity 30, and a fourth insert portion 36 which is received within fourth retention cavity 32. A second connecting member 38 homogenously integrally connects the third and fourth insert portions 34, 36.

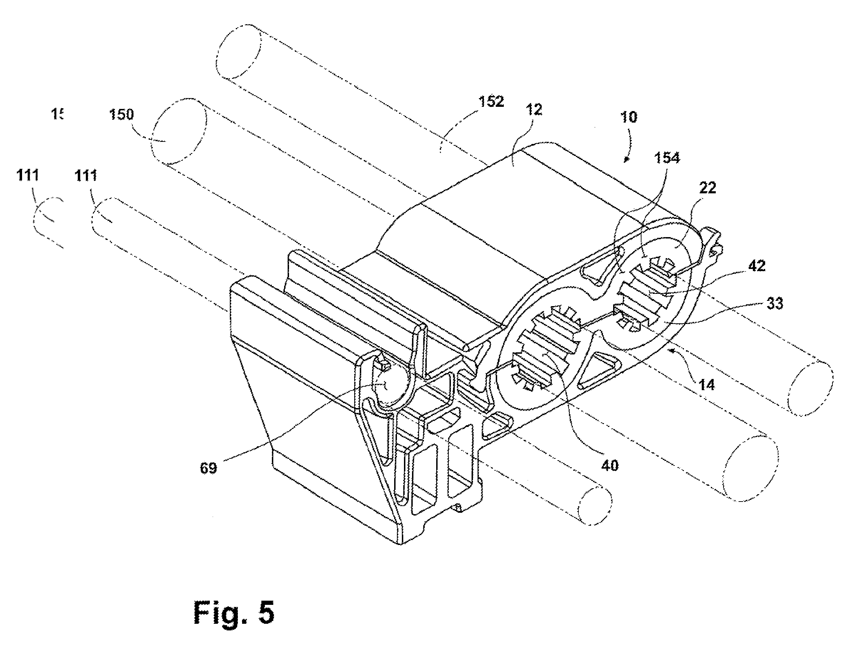

When the first and second body portions 12, 14 are positioned as shown in Figure 1 in a closed position, a combination of first insert portion 24 and third insert portion 34 can define a first engagement aperture 40. Similarly, a combination of second insert portion 26 and fourth insert portion 36 can define a second engagement aperture 42. First and second engagement apertures 40, 42 are each adapted to receive a tubular shaped item which will be described in further detail in reference to Figure 5. First and second engagement apertures 40, 42 can have equal internal diameters or can be differently sized from each other within the limits of the present disclosure. Each of the first, second, third, and fourth insert portions 24, 26, 34, 36 include a plurality of raised splines 44, 44' which extend radially inward toward an aperture longitudinal axis 46, 46' of first and second engagement apertures 40, 42. Each of the raised splines 44, 44' are made of the same resilient material of the first and second insert members 22, 33 which according to several embodiments can include material such as rubber, an elastomeric polymeric material, or the like capable of elastic deformation.

Each of the first, second, third, and fourth insert portions 24, 26, 34, 36 include an engagement flange which is seated against a flange receiving surface of the corresponding ones of the first, second, third and fourth retention cavities 18, 20, 30, 32. An exemplary engagement flange 48 of third insert portion 34 abuts and bonds to a flange receiving surface 50. First body portion 12 is rotatable with respect to second body portion 14 about a body rotational axis 52 to retain tubular shaped members within the first and second engagement apertures 40, 42. Once positioned in the closed position shown a retaining member 54 extending from second body portion 14 through an aperture 55 of first retention section 16 is curved to engage a hinge engagement portion 56 of a living hinge 57. Living hinge 57 homogeneously connects first body portion 12 to second body portion 14 and permits rotation of first and second body portions 12, 14 to the closed position shown in Figure 1 for conductive clamp 10. The hook-shaped or curved geometry of retaining member 54 prevents release of the first body portion 12 from the second body portion 14 should the living hinge 57 fail after conductive clamp 10 is positioned in the closed position.

At an opposed end of second body portion 14 from the living hinge 57 a deflectable engagement tongue 58 is provided. Deflectable engagement tongue 58 is received in a cavity 60 created in first body portion 12 after an engagement arm 62 deflects the deflectable engagement tongue 58 such that deflectable engagement tongue 58 elastically rebounds to contact engagement arm 62 to retain conductive clamp 10 in the closed position. A depression member 64 is provided for manual contact for a user to close first and second body portions 12, 14 providing surface area for contact by one or more fingers of the user to force the deflection of deflectable engagement tongue 58 for passage of the engagement arm 62.

To assist with the bonding between the first insert member 22 and first retention section 16, and between the second insert member 33 and the second retention section 29, a plurality of engagement fingers 65 are formed during the injection molding process which extend from the first and second insert members 22, 33 into corresponding finger receiving bores 66, 66' formed in the first and second retentions section 16, 29. Each of the engagement fingers 65 is separated from the first, second, third, and fourth insert portions, 24, 26, 34, 36 by individual dividing walls 67. The plurality of engagement fingers 65 therefore provide additional contact area to supplement and retain the contact of engagement flanges 48 with the flange receiving surfaces 50.

A second retention section 68 is homogeneously and simultaneously created when the second body portion 14 is molded. Second retention section 68 therefore is an integral extension of second body portion 14. Second retention section 68 provides a third engagement aperture 69 to receive an additional tubular shaped item which will be described in better detail in reference to Figure 5. A second deflectable engagement tongue 70 extends into third engagement aperture 69 and is elastically deflectable to return to the position shown in Figure 1 after deflection and contact with a recessed wall 72. A frictional contact edge 74 is positioned opposite to the second deflectable engagement tongue 70 to also assist in retaining the member received through third engagement aperture 69. Second deflectable engagement tongue 70 is integrally connected to a first support wall 75 and frictional contact edge 74 is homogeneously joined with a second support wall 76, which also provides homogenous support for deflectable engagement tongue 58. The item or items received through third engagement aperture 69 are aligned with an aperture longitudinal axis 78 defined by third engagement aperture 69.

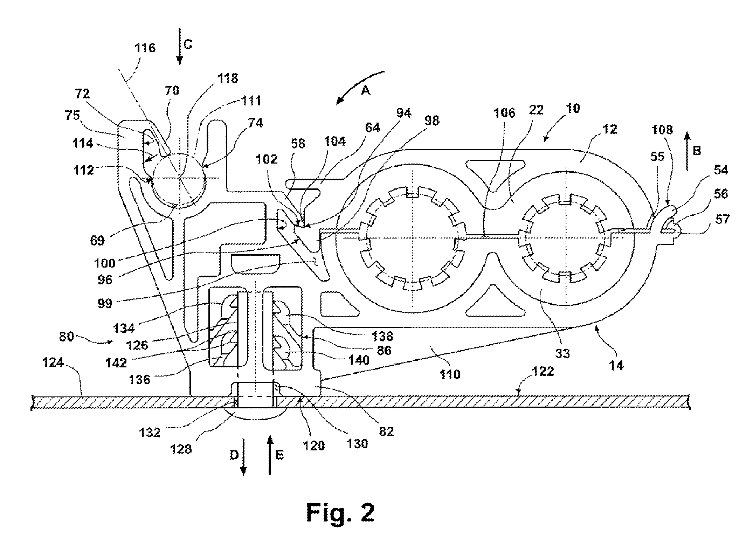

Conductive clamp 10 further includes a clamp mounting section 80 which is used to connect conductive clamp 10 to an object such as a body panel of a vehicle, shown and described in better detail in reference to Figure 2. According to several embodiments clamp mounting section 80 is homogeneously integrally connected to second body portion 14. Clamp mounting section 80 includes a support flange 82 which provides a mounting surface for conductive clamp 10. A receiving aperture 84 is created in clamp mounting section 80 which receives a fastener shown and described in reference to Figure 2. The fastener is engaged by a frictional engagement device 86 to mount conductive clamp 10. Conductive clamp 10 can further include a plurality of weight reduction cavities including first, second and third weight reduction cavities 88, 90, 92 which are provided to reduce the overall amount of material used in conductive clamp 10 thereby reducing the cost and weight of conductive clamp 10.

Referring now to Figure 2, a notch 94 created in first body portion 12 is adapted to engage with the deflectable engagement tongue 58 with conductive clamp 10 in the closed position. To close conductive clamp 10, first body portion 12 is rotated about living hinge 57 in a closing direction "A". To reach the closed position a tapered contact wall 96 of a leading end 98 initially contacts and elastically deflects deflectable engagement tongue 58 allowing leading end 98 to enter a cavity 99 of second body portion 14 with deflection of deflectable engagement tongue 58 limited by contact with a wall 100. As leading end 98 passes deflectable engagement tongue 58, deflectable engagement tongue 58 elastically rebounds to the position shown such that a contact face 102 of leading end 98 is contacted by a free end 104 of deflectable engagement tongue 58 providing a positive stop preventing release of first body portion 12.

In the closed position, a clearance gap 106 can be provided between first and second insert members 22, 33 to maintain an equal clamping force on the items engaged by these insert members. As first body portion 12 is rotated in the closing direction "A" the curved body 108 of retaining member 54 is received in a complimentary shaped aperture 55 such that retaining member 54 acts like a hook member able to contact hinge engagement portion 56 to thereafter prevent displacement of first body portion 12 in a release direction "B" should the living hinge 57 fail. According to several embodiments a reinforcement rib 110 can integrally connect the support flange 82 of the clamp mounting section 80 to second body portion 14 to provide additional support for the weight of components supported by conductive clamp 10.

A first service member 111 shown in phantom is provided to identify the features of conductive clamp 10 that retain the first service member 111. A second frictional contact edge 112 can be positioned opposite to frictional contact edge 74 to define a clearance gap that is smaller than a diameter or width of first service member 111 to frictionally restrain the first service member 111 within third engagement aperture 69. When first service member 111 is inserted into third engagement aperture 69, second deflectable engagement tongue 70 is elastically displaced in a deflection path 114 until second deflectable engagement tongue 70 contacts recessed wall 72 of first support wall 75. After first service member 111 translates past a free end of second deflectable engagement tongue 70, second deflectable engagement tongue 70 elastically rebounds to the position shown in Figure 2 such that a longitudinal axis 116 of second deflectable engagement tongue 70 is aligned with an axial centerline 118 of the first service member 111.

As further shown in Figure 2, conductive clamp 10 provides a mounting surface 120 of support flange 82 which is substantially flat to provide the mounting surface 120 maximum contact surface area with an outer surface 122 of a panel 124 such as a body panel of a vehicle. With mounting surface 120 in contact with outer surface 122 a shank 126 of a fastener 128 is received in a fastener receiving cavity 130 of clamp mounting section 80 and shank 126 is slidably inserted through a fastener clearance aperture 132 created in panel 124. It is also expected that fastener 128 can be a weld stud welded to outer surface 122 which would obviate the need for fastener clearance aperture 132. According to several embodiments a plurality of engagement fingers including first, second, third, and fourth deflectable engagement fingers 134, 136, 138, 140 are homogeneously integrally connected to clamp mounting section 80 and positioned within fastener receiving cavity 130 such that a plurality of engagement teeth 142 provided with each of the first, second, third, and fourth deflectable engagement fingers 134, 136, 138, 140 engage shank 126 as either a smooth bore outer diameter or to individually engage male threads created on shank 126. Deflectable engagement fingers 134, 136, 138, 140 are angled away from panel 124 to resist removal of shank 126 after engagement by the deflectable engagement fingers 134, 136, 138, 140.

Conductive clamp 10 can be connected to panel 124 in at least three ways. According to a first method of installation, shank 126 is inserted through fastener clearance aperture 132 to extend above outer surface 122 of panel 124, and then clamp mounting section 80 is pushed down over the extending shank 126. In a second method of installation, support flange 82 is first brought into contact with outer surface 122 of panel 124 and then fastener 128 is inserted through fastener clearance aperture 132 in an insertion direction "E" which also deflects first, second, third and fourth deflectable engagement fingers 134, 136, 138, 140 in direction "E". In a third installation method, fastener 128 is rotated such that threads (not shown) of the shank 126 engage the first, second, third and fourth deflectable engagement fingers 134, 136, 138, 140 to pull the support flange 82 in a mounting direction "D" towards outer surface 122 of panel 124.

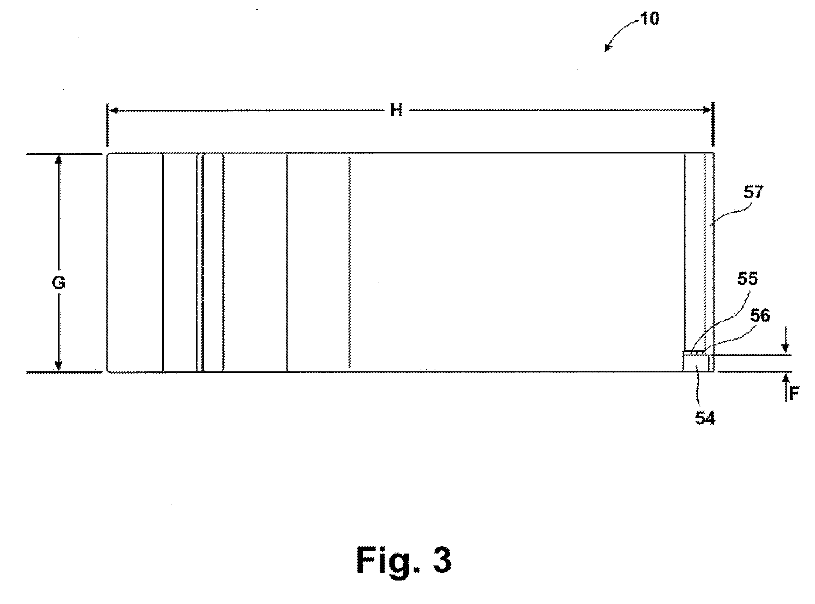

Referring to Figure 3, retaining member 54 has a retaining member width "F" which is a portion of a clamp width "G". Retaining member 54 is shown positioned at one side of conductive clamp 10, however it should be understood that retaining member 54 can be wider or narrower than shown and can further be positioned at any location along the clamp width "G" of conductive clamp 10. A clamp length "H" of conductive clamp 10 can be varied to suit the size and quantify of components engaged by conductive clamp 10.

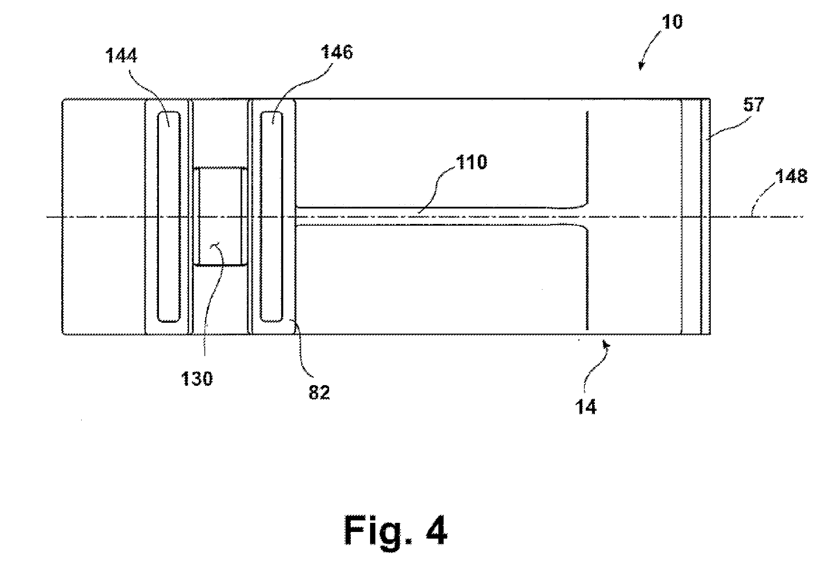

Referring to Figure 4, first and second slots 144, 146 can be provided in support flange 82 to further reduce the quantity of material required to construct constructive clamp 10 and to reduce its cost. First and second slots 144, 146 can be oriented transverse to a clamp longitudinal axis 148. First and second slots 144, 146 can also be positioned on opposite sides with respect to fastener receiving cavity 130. According to several embodiments reinforcement rib 110 is oriented coaxially with clamp longitudinal axis 148, however, reinforcement rib 110 can be repositioned from this coaxial alignment position at the discretion of the manufacturer. Support flange 82 and clamp mounting section 80 are positioned at an opposite end of conductive clamp 10 with respect to living hinge 57 so that the force applied to close conductive clamp 10 is substantially all transferred to support flange 82 thereby reducing a load applied to living hinge 57.

Referring now to Figure 5, according to several embodiments conductive clamp 10 can be used to retain one, two, or three objects including first service member 111, a second service member 150, and a third service member 152. First service member 111 is received and retained within third engagement aperture 69. Second service member 150 is received within first engagement aperture 40, and third service member 152 is received within second engagement aperture 42. The first, second, and third service members 111, 150, 152 can each be provided in different widths or diameters or can all be equivalent in width or diameter based on the geometry chosen for conductive clamp 10. The service members received by conductive clamp 10 can be metal or plastic tubing, individual electrical wires or wireway banks, pipes, and the like. The use of a secondary elastically deflectable material such as rubber or an elastically flexible polymeric material for first and second insert members 22, 33 allows the second and third service members 150, 152 to be acoustically isolated such that vibrations, flow tones, and the like passed from second and third service members 150, 152 to the panel 124 (or oppositely directed) are reduced or eliminated by the flexible material of the first and second insert members 22, 33 compared to a relatively more rigid material used for first and second body portions 12, 14. According to additional embodiments of the present disclosure electrically conductive material can be used for first and second insert members 22, 33, or electrically conductive material can be combined with the elastically material of first and second insert members 22, 33 such that first and second insert members 22, 33 can also provide the additional function of an electrical path to discharge static charges transferred via second or third service members 150, 152. By including the property of electrical conductivity with first and second insert members 22, 33, the use of an individual or additional metal stay to provide for the discharge of static electricity via conductive clamp 10 is eliminated. This eliminates the separately installed part commonly used in the industry for this purpose. Materials such as conductive metal fibers or carbon fibers can be added to the resilient material used for first and second insert members 22, 33 when these members are molded such that the electrically conductive material is evenly disbursed throughout the first and second insert members 22, 33. Conductive particles 154 represent the metal strands or electrically conductive fibers that can be used.

According to additional embodiments, the material of first and second body portions 12, 14 can also be selected from electrically conductive material, or can include conductive fibers or strands such as metal strands or carbon fibers, similar to the first and second insert members 22, 33. This provides an electrical conductivity path from the raised splines 44 through the first and second insert members 22, 33, through the perimeter of the first and second insert members 22, 33 and the plurality of engagement fingers 65, to the first and second body portions 12, 14. From the first and second body portions 12, 14 the electrical discharge path for the static electricity/charge is completed through the deflectable engagement fingers 134, 136, 138, 140 to the fastener 128 and the support flange 82 to the panel 124. According to several embodiments, the material of the first and second body portions 12, 14 can be a polymeric material such as a polyamide material having electrically conductive material such as but not limited to the metal strands or carbon fibers, collectively identified as conductive particles 154, dispersed within the polymeric material when the body portions are molded.

Conductive clamps 10 of the present disclosure offer several advantages. By using a two shot molding process to provide an elastically deflectable material in positions of direct contact with clamp supported members, and a comparatively rigid polymeric material for the remaining body portions of conductive clamp 10, acoustic attenuation can be achieved through conductive clamp 10. In addition to the acoustic attenuation properties provided, by further including electrically conductive material directly in the first and second insert members 22, 33, static electric charges that may occur for example if metallic or conductive metallic material is supported using conductive clamp 10 can be dissipated through the clamp. Electrically conductive material can also be included in at least one of the first and second body portions 12, 14. This dual function of the elastically deflectable first and second insert members 22, 33 which are additionally bonded to the body portions of conductive clamp 10 using a two shot molding process eliminate additional parts such as metal stays or grounding straps that are commonly used in the industry.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. A clamp (10), comprising:
first and second body portions (12, 14) integrally connected by a living hinge (57);
first and second insert members (22, 33) individually coupled to one of the first and second body portions (12, 14), the first and second insert members (22, 33) each being an elastically deflectable material; and
an electrically conductive material included with the elastically deflectable material of at least one of the first and second insert members (22, 33) to render the clamp (10) electrically conductive.

2. The clamp of Claim 1, wherein when the first and second body portions (12, 14) are rotated to a closed position about the living hinge (57) at least one engagement aperture (40, 42) is created between the first and second insert members (22, 33) adapted to releasably engage a service member (150, 152) such that a static electrical charge of the service member is transferred into the first and second insert members (22, 33).

3. The clamp of anyone of Claims 1 and 2, further comprising:
an engagement arm (62) extending from the first body portion (12); and
a deflectable engagement tongue (58) extending from the second body portion (14);
wherein the first body portion (12) is releasably coupled to the second body portion (14) by engagement between the engagement arm (62) and the deflectable tongue (58) when the first and second body portions (12, 14) are rotated about the living hinge (57) to a closed position.

4. The clamp of anyone of Claims 1 to 3, further comprising:
a retaining member (54) extending from one of the first and second body portions (12, 14) proximate to the living hinge (57); and
a hinge engagement portion (56) of the other one of the first and second body portions (12, 14);
wherein when the first and second body portions (12, 14) are rotated about the living hinge (57) to a closed position the retaining member (54) extends over the hinge engagement portion (56) preventing release of the first body portion (12) from the second body portion (14) upon subsequent failure of the living hinge (57).

5. The clamp of anyone of Claims 1 to 4, wherein an electrically conductive material is included in at least one of the first and second body portions (12, 14).

6. The clamp of anyone of Claims 1 to 5, wherein the electrically conductive material comprises a plurality of embedded metal strands and/or a plurality of embedded carbon fibers.

7. The clamp of anyone of Claims 1 to 6, further comprising first and second retention sections (16, 29) each created in one of the first and second body portions (12, 14), wherein the first and second retention sections (16, 29) each include:
an engagement flange (48) adapted to contact a flange receiving surface (50) of one of the first and second body portions (12, 14); and
a plurality of engagement fingers (65) individually adapted to be frictionally received in individual ones of a plurality of finger receiving bores (66, 66') of the first and second body portions.

8. The clamp of anyone of Claims 1 to 6, further comprising first and second retention sections (16, 29) each created in one of the first and second body portions (12, 14), wherein the first and second retention sections (16, 29) each include a plurality of raised splines (44, 44'), the raised splines (44, 44') adapted to elastically deflect to contact a service member (111, 150, 152) received in an aperture (55) defined between the first and second retention sections (16, 68) when the first and second body portions (12, 14) are rotated about the living hinge (57) to a closed position.

9. The clamp of anyone of Claims 1 to 8, further comprising a clamp mounting section (80) including:
a flange (82) adapted to contact a substantially flat panel (124);
a receiving aperture (84) adapted to receive a fastener inserted through the panel (124); and
a frictional engagement device (86) positioned within the receiving aperture (84) adapted to engage the fastener to couple the clamp to the panel (124).

10. The clamp of anyone of Claims 1 to 9, comprising:
polymeric first and second body portions (12, 14) integrally connected by a living hinge (57);
first and second retention sections (16, 29) each individually created in one of the first and second body portions (12, 14);
first and second insert members (22, 33) having injection molded features adapted to engage the first insert member (22) to one of the first and second retention sections (16, 29) and the second insert member (33) to the other one of the first and second retention sections (16, 29).

11. The clamp of anyone of Claims 1 to 10, wherein:
the first body portion (12) includes semi-circular shaped first and second retention cavities (18, 20);
the second body portion (14) includes semi-circular shaped third and fourth retention cavities (30, 32);
wherein the third retention cavity (30) is aligned with the first retention cavity (18) and the fourth retention cavity (32) is aligned with the second retention cavity (20) when the first and second body portions (12, 14)are rotated about the living hinge(57) to a closed position, and wherein each of the first and second insert members (22, 33) includes insert portions (24, 26, 34, 36) adapted to be received in one of the first, second, third, or fourth retention cavities (18, 20, 30, 32).

12. The clamp of anyone of Claims 1 to 11, wherein the first insert member (22) includes first and second insert portions (24, 26) and the second insert member (33) includes third and fourth insert portions (34, 36), and each of the first, second, third and fourth insert portions (24, 26, 34, 36)includes:
a radial flange (48) having a tubular body extending from the radial flange; and
the injection molded features include a plurality of engagement fingers (65) extending parallel to the tubular body and separated from the tubular body by a dividing wall (67), and wherein the first and second body portions (12, 14) each include a plurality of finger receiving apertures (66, 66') adapted to frictionally receive individual ones of the plurality of engagement fingers (65).

13. The clamp of anyone of Claims 1 to 12, when the first and second body portions (12, 14) are rotated about the living hinge (57) to a closed position the first and second insert members (22, 33) are separated by a clearance gap (106).

14. A method for manufacturing a clamp, the clamp having first and second body portions (12, 14) integrally connected by a living hinge (57) , and first and second insert members (22, 33), the method comprising:
adding an electrically conductive material to a polymeric material to create a first base material;
molding the first and second body portions (12, 14) together with the living hinge (57) from the first base material;
adding the electrically conductive material to an elastically deflectable material to create a second base material; and
co-molding the first and second retention sections (16, 29) from the second base material in a two-shot molding process to join the first insert member (22) to the first body portion (12) and the second insert member (33) to the second body portion (14).

15. The method of Claim 14, further comprising extending fingers from each of the first and second insert members (22, 33) to couple the first insert member (22) to the one of the first and second retention sections (16, 68) and the second insert member (33) to the other one of the first and second retention sections (16, 29).

16. The method of anyone of Claims 14 and 15, further comprising co-molding a plurality of raised splines (44, 44') in each of the first and second insert members (22, 33) adapted to deflect when a service member (150, 152) is received between the first and second insert members (22, 33) with the clamp in a closed position.
